# EUROPÄISCHE PATENTSCHRIFT

(11) **EP 2 417 005 B1**
(45) Veröffentlichungstag und Bekanntmachung des Hinweises auf die Patenterteilung: **26.02.2014**
(21) Anmeldenummer: 10713568.3
(22) Anmeldetag: 31.03.2010
(51) Int. Cl.: B62D 17/00, B62D 21/11, B62D 24/04, B60G 99/00

(54) **KRAFTFAHRZEUG MIT VERBINDUNGSELEMENTEN VERÄNDERBARER QUERSTEIFIGKEIT ZWISCHEN EINEM CHASSISRAHMEN UND EINEM FAHRZEUGAUFBAU**
VEHICLE WITH MOUNTINGS OF VARIABLE LATERAL STIFFNESS BETWEEN A BODY AND A CHASSIS
VÉHICULE AVEC DES MOYENS DE LIAISON À FLEXIBLE RIGIDITÉ LATÉRALE ENTRE UN CHÂSSIS ET UNE CARROSSERIE

(30) Priorität: 09.04.2009 DE 102009017193
(43) Veröffentlichungstag der Anmeldung: 15.02.2012
(73) Patentinhaber: Bayerische Motoren Werke Aktiengesellschaft, 80809 München (DE)
(72) Erfinder: SCHEUCHER, Klaus-Peter, 80799 München (DE)
(86) Internationale Anmeldenummer: PCT/EP2010/002074
(87) Internationale Veröffentlichungsnummer: WO 2010/115574

(56) Entgegenhaltungen:
- EP-A1- 0 868 338
- DE-A1- 3 619 755
- DE-A1- 3 703 618

## Beschreibung

Die Erfindung betrifft ein Kraftfahrzeug mit einem Chassisrahmen und einem Fahrzeugaufbau entsprechend dem Oberbegriff des Anspruchs 1. Ein derartiges Kraftfahrzeug ist aus der EP 0 868 338 B1 bekannt.

Angaben, wie das Eigenlenkverhalten des bekannten Kraftfahrzeugs beeinflusst werden kann, sind der EP 0 868 338 B1 nicht zu entnehmen.

Ein Verfahren zur Veränderung des Eigenlenkverhalten der Hinterräder eines zweispurigen Kraftfahrzeug ist aus der DE 103 51 574 A1 bekannt. Nach diesem Verfahren, wird zumindest eines der elastischen Lager des am Fahrzeugboden abgestützten Achsträger als schaltbares Lager ausgebildet und wird die Charakteristik der bezüglich der Fahrzeug-Mittellinie im wesentlichen symmetrisch angeordneten Lager situativ asymmetrisch eingestellt.

Aufgabe der Erfindung ist es, das bekannte Kraftfahrzeug so weiterzubilden, dass das Eigenlenkverhalten des Kraftfahrzeugs beeinflussbar ist.

Diese Aufgabe wird durch ein Kraftfahrzeug mit den Merkmalen des Anspruchs 1 gelöst. Anspruch 5 betrifft ein Verfahren zur Beeinflussung des Eigenlenkverhaltens des Kraftfahrzeugs.

Durch den Abstand der Verbindungselemente von der Verbindungslinie der Radaufstandspunkte der Räder einer Achse entsteht ein Hebelarm, der bei Kurvenfahrt eine Verformung des Chassisrahmens im Sinn einer geringfügigen Durchbiegung in einer Ebene parallel zur Fahrbahn erzeugt. Durch die Verformung des Chassisrahmens und die damit einhergehende Rückwirkung auf die Vorderund/oder Hinterachse des Kraftfahrzeugs wird das Eigenlenkverhalten des Kraftfahrzeugs beeinflusst. Bei dem aus der EP 0 868 338 B1 bekannten Kraftfahrzeug ist das Eigenlenkverhalten durch die Lage der Verbindungselemente fest vorgegeben. Eine Veränderung des Eigenlenkverhaltens ist somit nicht möglich.

Kerngedanke der Erfindung ist es, sowohl vor als auch hinter der Verbindungslinie der Radaufstandspunkte der Vorderräder und/oder der Hinterräder wenigstens ein Verbindungselement vorzusehen, wobei die Verbindungselemente jeweils in ihrer Quersteifigkeit verändert werden können. Hierdurch kann die Verbindungsstelle zwischen Fahrzeugaufbau und Chassisrahmen quasi verlagert werden, so dass sich der Hebelarm für den Angriff der vom Fahrzeugaufbau eingeleiteten Zentrifugalkraft verändert und damit auf das Eigenlenkverhalten des Kraftfahrzeugs Einfluss genommen werden kann.

Bevorzugt sind die Verbindungselemente schaltbar zwischen den beiden Zuständen "sehr hohe Quersteifigkeit" und "sehr niedrige Quersteifigkeit" ausgeführt. Damit kann an der betreffenden Achse zwischen einer Lage des wenigstens einen Verbindungselements vor oder hinter der Verbindungslinie der Radaufstandspunkte hin und her geschaltet werden, mit entsprechender Auswirkung auf das Eigenlenkverhalten.

Sind sowohl an der Vorder- als auch an der Hinterachse des Kraftfahrzeugs Verbindungselemente mit veränderbarer Quersteifigkeit vorgesehen, bevorzugt Verbindungselemente, bei denen zwischen den beiden Zuständen "sehr hohe Quersteifigkeit" und "sehr niedrige Quersteifigkeit" umgeschaltet werden kann, ist es möglich, das Eigenlenkverhalten in komplexer Weise zu beeinflussen.

Für die Beeinflussung des Eigenlenkverhaltens ist die Quersteifigkeit der Verbindungselemente von ausschlaggebender Bedeutung.

Den Verbindungselementen kommt bevorzugt nicht nur die Aufgabe der Übertragung von Querkräften, sondern auch die Übertragung von Längs- und/oder Vertikalkräften zu. Hierzu ist an der betreffenden Achse sowohl das wenigstens eine vordere als auch das wenigstens eine hintere Verbindungselement so ausgelegt, dass es jeweils alleine in der Lage ist, eine in allen Betriebszuständen des Kraftfahrzeugs funktional einwandfreie Verbindung zwischen Fahrzeugaufbau und Chassisrahmen zu gewährleisten. Dabei können in einer vorteilhaften Ausgestaltung der Erfindung die Verbindungselemente so ausgeführt sein, dass neben der Quersteifigkeit durch entsprechende Ansteuerung der Verbindungselemente auch eine Veränderung der Längs- und/oder Hochsteifigkeit erreicht wird. Hierdurch kann beispielsweise der Fahrkomfort (Abrollkomfort) beeinflusst werden.

Alternativ können zur Übertragung von Horizontalkräften (insbesondere Querkräften) einerseits und Vertikalkräften andererseits unterschiedliche Gruppen von Verbindungselementen vorgesehen sein. Durch eine derartige bauliche Trennung ist es möglich, mit nur jeweils einem Verbindungselement vor und hinter einer Achse, das in seiner Quersteifigkeit veränderlich ist, das Eigenlenkverhalten des Kraftfahrzeugs zu beeinflussen.

Die Verbindungselemente gemäß den oben stehenden Ausgestaltungen der Erfindung sind als schaltbare Elemente ausgebildet, die gegebenenfalls in Zwischenzuständen ansteuerbar sind.

In einer bevorzugten Ausgestaltung der Erfindung wirken die Verbindungselemente ohne Aufbringung eines aktiven Stellweges, arbeiten somit also quasi wegfrei.

In einer alternativen Ausgestaltung der Erfindung kommen Verbindungselemente zum Einsatz, die einen Stellweg und/oder einen Stellwinkel aufbringen können. Durch derartige "aktive" Verbindungselemente kann bei Kurvenfahrt des Kraftfahrzeugs beispielsweise der Gierwinkel des Fahrzeugaufbaus so beeinflusst werden, dass der Gierwinkel des Fahrzeugaufbaus kleiner ist als der Gierwinkel des Chassisrahmens. Durch dieses geringere "Eindrehen" des Fahrzeugaufbaus gegenüber dem Chassisrahmen ergibt sich ein besonders agiles Fahrverhalten, beispielsweise bei Slalomfahrt des Kraftfahrzeugs.

Vorteilhafte Ausgestaltungen der Erfindung sind Gegenstand der Unteransprüche.

Mögliche Ausführungsformen der Erfindung sind in der Zeichnung (Fig. 3 bis 8) dargestellt und werden nachfolgend näher erläutert. Es zeigt:
- Fig. 1 und 2: schematische Darstellungen bekannter Kraftfahrzeuge in Kurvenfahrt, mit Verdeutlichung der Auswirkung der bei Kurvenfahrt auftretenden Kräfte auf das Eigenlenkverhalten des Kraftfahrzeugs,
- Fig. 3: eine schematische Darstellung eines erfindungsgemäßen Kraftfahrzeugs,
- Fig. 4 bis 7: der Fig. 1 entsprechende Darstellungen erfindungsgemäßer Kraftfahrzeuge und
- Fig. 8: eine schematische Darstellung eines erfindungsgemäßen Kraftfahrzeugs mit alternativen Anordnungen von Verbindungselementen.

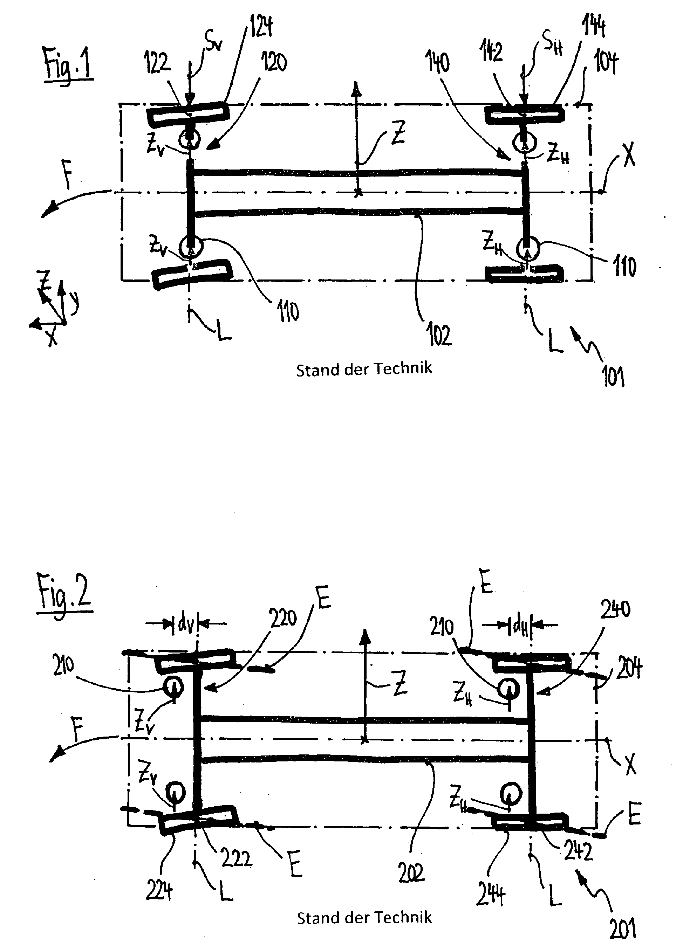

Fig. 1 zeigt ein Kraftfahrzeug 101 nach dem Stand der Technik, wie es beispielsweise aus der AT 208 243 B bekannt ist. Dieses auch unter der Bezeichnung "Haflinger" bekannte Fahrzeug weist einen Chassisrahmen 102 und einen mit strichpunktierten Linien dargestellten Fahrzeugaufbau 104 auf. An der Vorder- und an der Hinterachse 120 bzw. 140 sind jeweils zwei Verbindungselemente 110 vorgesehen, die den Chassisrahmen 102 mit dem Fahrzeugaufbau 104 verbinden. Die Verbindungselemente 110 befinden sich oberhalb der Verbindungslinie L der Radaufstandspunkte 122 der Vorderräder 124 bzw. oberhalb der Verbindungslinie L der Radaufstandspunkte 142 der Hinterräder 144, sind also in Richtung der Fahrzeuglängsmittelachse X gegenüber den Verbindungslinien L nicht versetzt. Die Raumkoordinaten sind mit x (Fahrzeuglängsrichtung), y (Fahrzeugquerrichtung) und z (Fahrzeughochrichtung) bezeichnet.

Die bei Kurvenfahrt des Kraftfahrzeugs 101 auftretenden Kräfte sind am Beispiel des Befahrens einer Linkskurve gemäß dem Fahrtrichtungspfeil F dargestellt. Die Abstützkräfte Z_{V} und Z_{H} des Fahrzeugaufbaus 104, die aus der Zentrifugalkraft Z des Fahrzeugaufbaus 104 resultieren, verlaufen in einer Vertikalquerebene des Kraftfahrzeugs 101, die die Verbindungslinien L der Radaufstandspunkte 122 der Vorderräder 124 bzw. die Verbindungslinien L der Radaufstandspunkte 142 der Hinterräder 144 enthält. Demzufolge wirken die Abstützkräfte Z_{V} und Z_{H} in derselben Vertikalquerebene yz, in der auch die an den Vorderrädern 124 bzw. die an den Hinterrädern 144 auftretenden Seitenkräfte S_{V} bzw. S_{H} verlaufen. Da somit vom Fahrzeugaufbau 104 keine Biegemomente in den Chassisrahmen 102 eingeleitet werden, weist das Kraftfahrzeug 101 bei Kurvenfahrt ein neutrales Fahrverhalten ohne Eigenlenken auf.

Fig. 2 zeigt ein weiteres Kraftfahrzeug 201 nach dem Stand der Technik, das aus der eingangs genannten EP 0 868 338 B1 bekannt ist. Bei dem Kraftfahrzeug 201 sind die Verbindungselemente 210 zwischen Chassisrahmen 202 und Fahrzeugaufbau 204 in Fahrzeuglängsrichtung x gegenüber den Verbindungslinien L der Radaufstandspunkte 222 der Vorderräder 224 und der Radaufstandspunkte 242 der Hinterräder 244 versetzt. Hierdurch entstehen am Chassisrahmen 202 Hebelarme d_{V} und d_{H} für den Angriff der Abstützkräfte Z_{V} und Z_{H}, die aus der Zentrifugalkraft Z des Fahrzeugaufbaus 204 resultieren. Die hierdurch bei Kurvenfahrt auf den Chassisrahmen 202 wirkenden Biegemomente führen zu einer elastischen Verformung des Chassisrahmens 202. Tatsächlich sind die Verformungen infolge der Biegemomente insbesondere bei einem sehr steif ausgeführten Chassisrahmen 202 kaum wahrnehmbar. Dennoch erzeugen die Biegemomente zumindest tendenziell ein Eigenlenkverhalten des Kraftfahrzeugs 201, da die Elemente der Vorder- und der Hinterachse 220 bzw. 240 mit dem Chassisrahmen 202 mit bewegt werden. Damit einher geht ein Lenkausschlag der Vorderräder 224 und der Hinterräder 244, der in Fig. 2 mit strichlierten Linien E symbolisiert ist, in stark überzeichneter Weise.

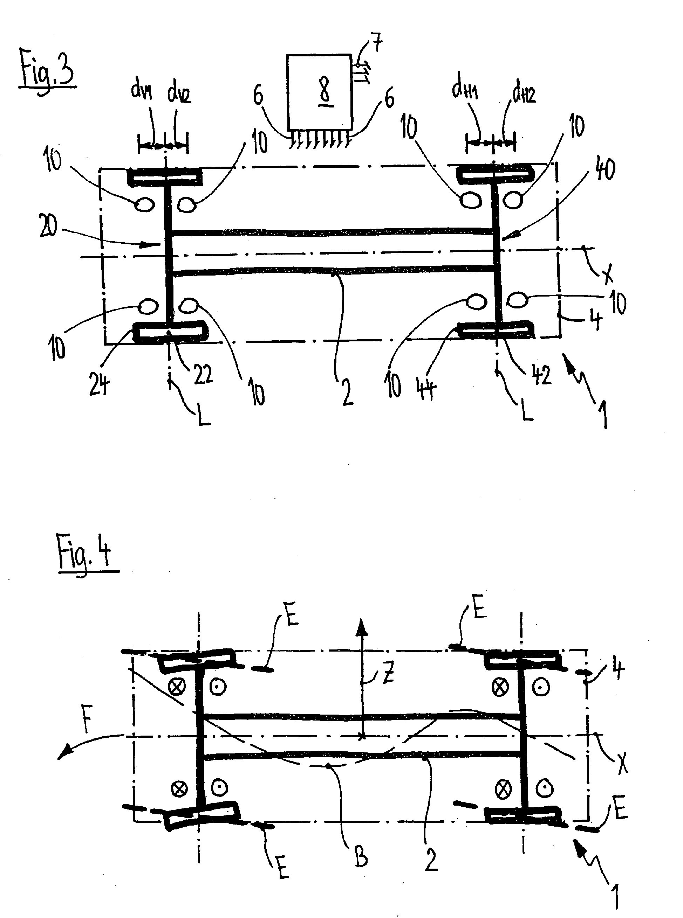

Fig. 3 zeigt ein erfindungsgemäßes Kraftfahrzeug 1 mit einem Chassisrahmen 2 und einem Fahrzeugaufbau 4 im Ruhezustand, während die Fig. 4 bis 7 das erfindungsgemäße Kraftfahrzeug 1 bei Kurvenfahrt darstellen. Der Chassisrahmen 2 nimmt eine Vorderachse 20 mit Vorderrädern 24 und eine Hinterachse 40 mit Hinterrädern 44 auf. Die Anbindung des Fahrzeugaufbaus 4 an den Chassisrahmen 2 erfolgt über insgesamt acht Verbindungselemente 10, die paarweise vor und hinter der Verbindungslinie L der Radaufstandspunkte 22 der Vorderräder 24 bzw. der Verbindungslinie L der Radaufstandspunkte 42 der Hinterräder 44 angeordnet sind. Der Versatz der Verbindungselemente 10 gegenüber den Verbindungslinien L in Fahrzeuglängsrichtung x ist mit d_{V1} und d_{V2} bzw. mit d_{H1} und d_{H2} bezeichnet. Die Verbindungselemente 10 weisen eine nicht näher dargestellte Einrichtung zur Veränderung der Quersteifigkeit der Verbindungselemente 10 auf. Die Einrichtungen zur Veränderung der Quersteifigkeit werden über Steuerleitungen 6 angesteuert. Die Ansteuerungslogik ist in einer Steuereinheit 8 hinterlegt. Über Eingänge 7 werden der Steuereinheit 8 Signale beispielsweise aus dem Fahrbetrieb des Kraftfahrzeugs 1 zugeführt. Selbstverständlich kann anstelle der Steuereinheit 8 auch eine Regeleinheit vorgesehen sein, die Signale der Verbindungselemente 10 berücksichtigt.

Die Veränderung der Quersteifigkeit der Verbindungselemente 10 erfolgt bevorzugt im Sinn eines Umschaltens zwischen den beiden Zuständen "maximale Quersteifigkeit" und "minimale Quersteifigkeit". Durch das Umschalten zwischen den beiden Zuständen "maximale Quersteifigkeit" und "minimale Quersteifigkeit" wird somit das betreffende Verbindungselement 10 in Bezug auf die Übertragung von Querkräften ein- bzw. ausgeschaltet. Somit können die Verbindungselemente 10 aktiviert bzw. deaktiviert werden. Da die Verbindungselemente 10 paarweise vor und hinter den Achsen 20 und 40 des Kraftfahrzeugs 1 vorgesehen sind, können durch Umschalten zwischen den Verbindungselementen 10 vor bzw. hinter einer Achse 20 bzw. 40 unterschiedliche geometrische Konstellationen der Verbindung zwischen Chassisrahmen 2 und Fahrzeugaufbau 4 erzeugt werden.

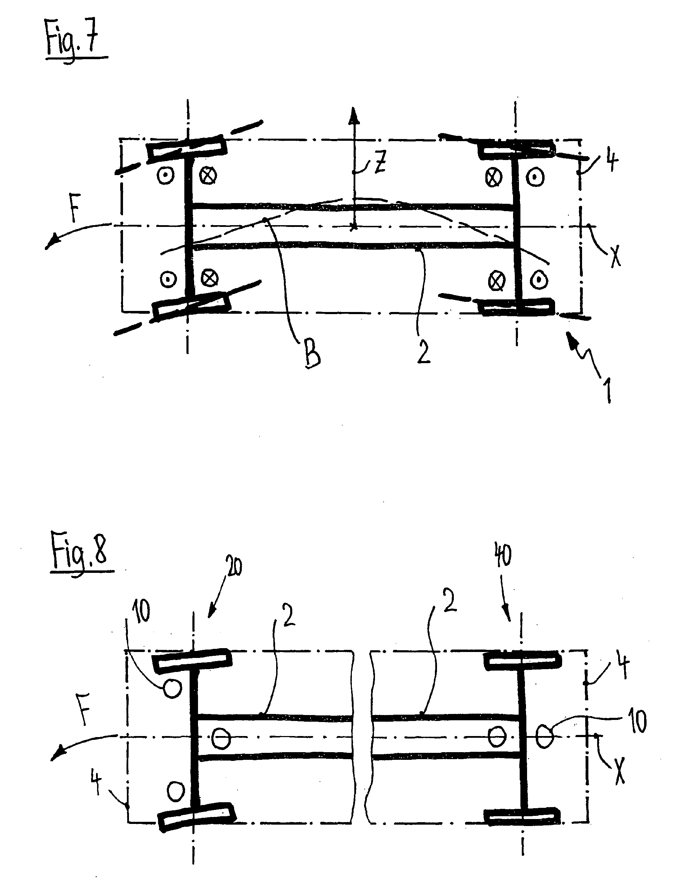

In der zeichnerischen Darstellung der Fig. 3 und 8 sind die Verbindungselemente 10 neutral als Kreise dargestellt. In den Fig. 4 bis 7 sind die Verbindungselemente 10 im Zustand "maximale Quersteifigkeit" durch ein Kreuz im Kreis und die Verbindungselemente 10 im Zustand "minimale Quersteifigkeit" durch einen Punkt im Kreis dargestellt.

Neben den beiden Zuständen "maximale Quersteifigkeit" und "minimale Quersteifigkeit" der Verbindungselemente 10 können auch Zwischenstufen eingenommen werden. Ein stetiger Übergang zwischen den beiden Zuständen "maximale Quersteifigkeit" und "minimale Quersteifigkeit" ist beispielsweise sinnvoll, wenn auf der Grundlage von aus dem Fahrbetrieb des Kraftfahrzeugs 1 sensierten Daten ableitbar ist, dass ein definierter Übergang in einen anderen Fahrzustand erfolgen wird. Hiermit kann eine abrupte Änderung des Fahrverhaltens vermieden werden, mit dem Vorteil eines erhöhten Fahrkomforts. Außerdem kann durch Ansteuerung von Zwischenstufen eine Feineinstellung erfolgen, um bei bestimmten Fahrzuständen einen besonders hohen Fahr- und Akustikkomfort zu erreichen. So kann zum Beispiel durch Reduzierung der Steifigkeit in den Verbindungselementen 10, gegebenenfalls nicht nur in Querrichtung der Verbindungselemente 10, bei Geradeausfahrt ein hoher Abrollkomfort mit verringerten Abrollgeräuschen erreicht werden. Andererseits wird durch eine sehr hohe Steifigkeit der Verbindungselemente 10, insbesondere eine hohe Quersteifigkeit, eine "sportlichstraffe" Auslegung geschaffen.

Die Steuereinheit 8 steuert die Verbindungselemente 10 bevorzugt in Abhängigkeit von Parametern aus dem Fahrbetrieb des Kraftfahrzeugs 1 an, beispielsweise in Abhängigkeit von der Geschwindigkeit und/oder dem Lenkeinschlag und/oder der Beladung Kraftfahrzeugs 1. Selbstverständlich können auch Parameter aus der Umgebung des Kraftfahrzeugs 1 (z. B. Temperatur, Niederschlag, Reibbeiwert der Fahrbahn etc.) zur Ansteuerung herangezogen werden. Ebenso kann die Steuereinheit 8 eine Vorgabe des Fahrers des Kraftfahrzeugs 1 hinsichtlich des gewünschten Eigenlenkverhaltens (innerhalb der Grenzen einer ausreichenden Fahrstabilität des Kraftfahrzeugs 1) berücksichtigen, wie beispielsweise eine Auswahl zwischen den Charakteristika "sportlich" - "neutral" - "komfortabel".

In den Fig. 4 bis 7 ist jeweils der grundsätzliche Verlauf der Durchbiegung des Chassisrahmens 2, verursacht durch die Abstützkräfte des Fahrzeugaufbaus 4, mit gestrichelten Biegelinien B stark überzeichnet dargestellt. Tatsächlich sind die Verformungen infolge der Biegemomente kaum wahrnehmbar. Das infolge der Durchbiegung des Chassisrahmens 2 jeweils erzeugte Eigenlenkverhalten des Kraftfahrzeugs 1 ist in den Fig. 4 bis 7 durch strichlierte Linien E (durch die Radmittelpunkte 22 und 42) dargestellt.

Die Konstellation gemäß Fig. 4 entspricht einer Anordnung der Verbindungselemente 10 wie aus dem Stand der Technik gemäß Fig. 2 bekannt. Das gemäß Fig. 4 erzeugte Eigenlenkverhalten des Kraftfahrzeugs 1, symbolisiert durch die strichlierten Linien E, bewirkt grundsätzlich eine Stabilisierung des Kraftfahrzeugs 1 bei höheren Geschwindigkeiten, im Sinn eines "untersteuernden Korrektivs".

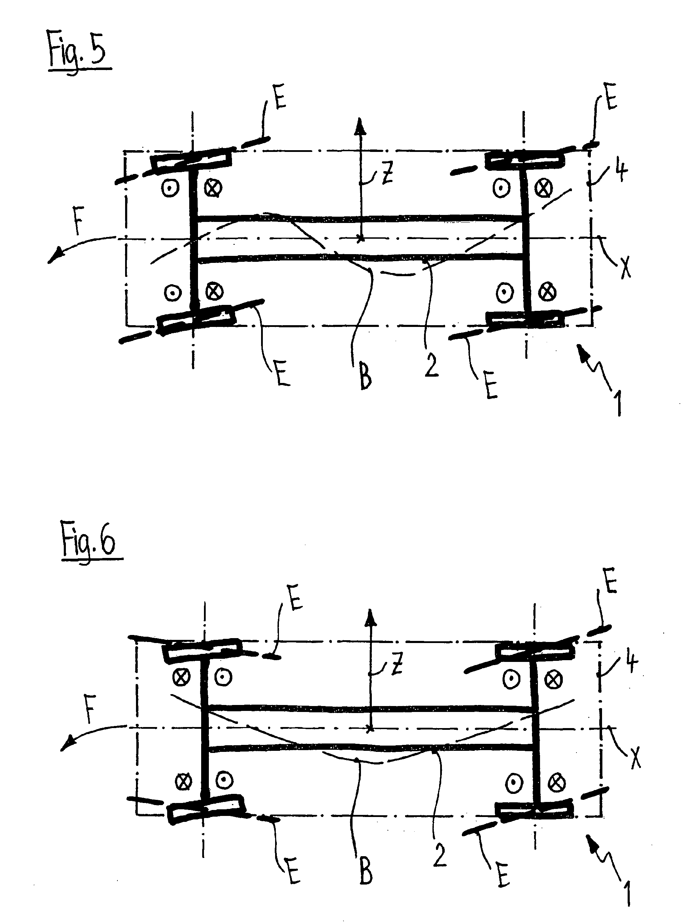

Bei der Konstellation gemäß Fig. 5 wird das Einlenken des Kraftfahrzeugs 1 tendenziell verstärkt, also leicht in Richtung "Übersteuern" verändert, so dass das Lenkverhalten direkter wird.

Die Ansteuerungen gemäß den Fig. 4 und 5 (gleichgerichtetes Lenken an der Vorder- und an der Hinterachse) finden vor allem, jedoch nicht ausschließlich, bei hohen Fahrgeschwindigkeiten Anwendung.

Eine Ansteuerung der Verbindungselemente 10 gemäß Fig. 6 erzeugt ein untersteuerndes Fahrverhalten, während durch eine Schaltung der Verbindungselemente 10 gemäß Fig. 7 ein übersteuerndes Fahrverhalten des Kraftfahrzeugs 1 erreicht wird.

Die Ansteuerungen gemäß den Fig. 6 und 7 (gegengerichtetes Lenken an der Vorder- und an der Hinterachse) finden vor allem, jedoch nicht ausschließlich, bei geringeren bis mittleren Fahrgeschwindigkeiten Anwendung.

Grundsätzlich gilt, dass für eine Verformung des Chassisrahmens 2, wie anhand der strichlierten Biegelinien B in den Fig. 4 bis 7 dargestellt, entsprechend hohe Querkräfte aus der Fahrdynamik des Kraftfahrzeugs 1 vorhanden sein müssen, also eine Geschwindigkeit deutlich über der Rangiergeschwindigkeit (Einparken etc.) vorliegen muss.

Fig. 8 zeigt weitere Möglichkeiten der Anordnung von Verbindungselementen 10. Diese alternativen Anordnungen erfordern zusätzliche, nicht dargestellte Verbindungselemente für die Übertragung von Hochkräften (und gegebenenfalls Längskräften) zwischen dem Chassisrahmen 2 und dem Fahrzeugaufbau 4. Durch diese Aufteilung in zwei Baugruppen unterschiedlicher Verbindungselemente zwischen Chassisrahmen 2 und Fahrzeugaufbau 4 ist ein einziges Verbindungselement 10 vor und hinter der Vorderachse 20 und/oder der Hinterachse 40 ausreichend, um die Querkräfte (und gegebenenfalls die Längskräfte) zu übertragen.

Im linken Teil der Darstellung von Fig. 8 ist am Beispiel der Vorderachse 20 eine Dreipunktlagerung dargestellt, mit zwei Verbindungselementen 10 vor der Vorderachse 20 und einem einzigen Verbindungselement 10 hinter der Vorderachse 20. Selbstverständlich kann die Dreipunktlagerung auch mit einem einzigen Verbindungselement 10 vor und zwei Verbindungselementen 10 hinter der Vorderachse 20 ausgeführt sein. Bei einer Realisierung der Dreipunktlagerung sowohl an der Vorderachse 20 als auch an der Hinterachse 40 sind insgesamt sechs Verbindungselemente 10 erforderlich.

Im rechten Teil der Darstellung von Fig. 8 ist am Beispiel der Hinterachse 40 eine Zweipunktlagerung dargestellt, mit jeweils einem Verbindungselement 10 vor und hinter der Hinterachse 40. Bei einer Realisierung der Zweipunktlagerung sowohl an der Vorderachse 20 als auch an der Hinterachse 40 sind insgesamt vier Verbindungselemente 10 erforderlich.

In der Praxis wird die Anordnung von Verbindungselementen 10 gemäß Fig. 8 in der Fahrzeuglängsmittelachse X durch den Bauraumbedarf des Antriebsstrangs (nicht dargestellt) erschwert.

Zusammenfassend lässt sich die vorliegende Erfindung wie folgt beschreiben:
Ein Kraftfahrzeug 1 mit einem Chassisrahmen 2 und einem Fahrzeugaufbau 4 weist schaltbare Verbindungselemente 10 zwischen dem Chassisrahmen 2 und dem Fahrzeugaufbau 4 auf. Die Verbindungselemente 10 sind sowohl vor als auch hinter der Verbindungslinie L der Radaufstandspunkte 22 der Vorderräder 24 und/oder der Verbindungslinie L der Radaufstandspunkte 42 der Hinterräder 44 angeordnet.
Hierdurch übt der Fahrzeugaufbau 4 bei Kurvenfahrt ein Biegemoment auf den Chassisrahmen 2 aus, woraus ein Eigenlenkverhalten der Vorderachse 20 und/oder der Hinterachse 40 resultiert. Dieses Eigenlenkverhalten kann beeinflusst werden, indem entweder die Verbindungselemente 10 vor oder die Verbindungselemente 10 hinter der betreffenden Achse 20 bzw. 40 "aktiv" geschaltet werden, also so angesteuert werden, dass sie eine möglichst hohe Quersteifigkeit aufweisen, während die jeweils anderen Verbindungselemente 10 "passiv" geschaltet werden, also so angesteuert werden, dass sie eine möglichst geringe Quersteifigkeit aufweisen. Die Ansteuerung erfolgt über eine Steuereinheit 8, die als Steuergrößen beispielsweise Parameter aus dem Fahrbetrieb des Kraftfahrzeugs 1 verwendet.

## Patentansprüche

1. Kraftfahrzeug, mit einem Chassisrahmen und einem Fahrzeugaufbau, wobei der Chassisrahmen das Fahrwerk mit einer Vorder- und einer Hinterachse aufnimmt und der Fahrzeugaufbau über Verbindungselemente mit dem Chassisrahmen verbunden ist, wobei die Verbindungselemente - in Fahrzeuglängsrichtung betrachtet - mit Abstand zur Verbindungslinie der Radaufstandspunkte der Räder von Vorder- und/oder Hinterachse angeordnet sind,
**dadurch gekennzeichnet, dass** an der Vorderachse (20) und/oder an der Hinterachse (40) - in Fahrzeuglängsrichtung (x) betrachtet - sowohl vor als auch hinter der betreffenden Verbindungslinie (L) der Radaufstandspunkte (22, 42) jeweils wenigstens ein Verbindungselement (10) vorgesehen ist, wobei die Quersteifigkeit der Verbindungselemente (10) veränderbar ist.

2. Kraftfahrzeug nach Anspruch 1,
**dadurch gekennzeichnet, dass** die Quersteifigkeit der Verbindungselemente (10) zwischen den beiden Zuständen "sehr hohe Quersteifigkeit" und "sehr niedrige Quersteifigkeit" schaltbar ist.

3. Kraftfahrzeug nach Anspruch 1 oder 2,
**dadurch gekennzeichnet, dass** an der Vorderachse (20) und/oder an der Hinterachse (40) - in Fahrzeuglängsrichtung (x) betrachtet - vor und hinter der betreffenden Verbindungslinie (L) der Radaufstandspunkte (22, 42) jeweils zwei Verbindungselemente (10) vorgesehen sind.

4. Kraftfahrzeug nach einem der vorangegangenen Ansprüche,
**dadurch gekennzeichnet, dass** wenigstens ein Verbindungselement (10) so ausgebildet ist, dass es einen Stellweg und/ oder einen Stellwinkel ausführen kann.

5. Verfahren zur Beeinflussung des Eigenlenkverhaltens eines Kraftfahrzeugs, das einen Chassisrahmen und einen Fahrzeugaufbau aufweist, wobei der Chassisrahmen eine Vorder- und eine Hinterachse aufnimmt und der Fahrzeugaufbau über Verbindungselemente mit dem Chassisrahmen verbunden ist,
**dadurch gekennzeichnet, dass** an der Vorderachse (20) und/oder an der Hinterachse (40) - in Fahrzeuglängsrichtung (x) betrachtet - sowohl vor als auch hinter der betreffenden Verbindungslinie (L) der Radaufstandspunkte (22, 42) der Räder (24, 44) von Vorder- und/oder Hinterachse (20, 40) wenigstens ein Verbindungselement (10) vorgesehen ist, dessen Quersteifigkeit verändert wird.

6. Verfahren nach Anspruch 5,
**dadurch gekennzeichnet, dass** die Quersteifigkeit des wenigstens einen Verbindungselements (10) vor und hinter der betreffenden Verbindungslinie (L) der Radaufstandspunkte (22, 42) so verändert wird, dass
- in einer ersten Einstellung das wenigstens eine Verbindungselement (10) vor der Verbindungslinie (L) der Radaufstandspunkte (22, 42) eine sehr hohe Quersteifigkeit und das wenigstens eine Verbindungselement (10) hinter der Verbindungslinie (L) der Radaufstandspunkte (22, 42) eine sehr niedrige Quersteifigkeit hat und
- in einer zweiten Einstellung das wenigstens eine Verbindungselement (10) vor der Verbindungslinie (L) der Radaufstandspunkte (22, 42) eine sehr niedrige Quersteifigkeit und das wenigstens eine Verbindungselement (10) hinter der Verbindungslinie (L) der Radaufstandspunkte (22, 42) eine sehr hohe Quersteifigkeit hat.

7. Verfahren nach Anspruch 5 oder 6,
**dadurch gekennzeichnet, dass** die Quersteifigkeit der Verbindungselemente (10) in Abhängigkeit von wenigstens einem Parameter aus dem Fahrbetrieb des Kraftfahrzeugs (1) verändert wird.

8. Verfahren nach Anspruch 7,
**dadurch gekennzeichnet, dass** die Quersteifigkeit der Verbindungselemente (10) in Abhängigkeit von der Geschwindigkeit und/oder dem Lenkeinschlag und/oder der Beladung des Kraftfahrzeugs (1) verändert wird.

9. Verfahren nach einem der vorangegangenen Ansprüche, zur Anwendung an einem Kraftfahrzeug gemäß Anspruch 4,
**dadurch gekennzeichnet, dass** das Verbindungselement (10) so angesteuert wird, dass es bei Kurvenfahrt des Kraftfahrzeugs (1) am Fahrzeugaufbau (4) einen Gierwinkel erzeugt, der kleiner ist als der Gierwinkel des Chassisrahmens (2).

## Claims

1. A motor vehicle with a chassis frame and a body, wherein the chassis frame supports the chassis with a front axle and a rear axle and the body is connected to the chassis frame by connecting elements, wherein the connecting elements, considered in the longitudinal direction of the vehicle, are disposed at a distance from the line joining the wheel contact areas on the front axle and/or rear axle,
**characterised in that** a respective connecting element (10) is provided on the front axle (20) and/or on the rear axle (40), considered in the longitudinal direction (x) of the vehicle, both before and behind the respective line (L) connecting the wheel contact areas (22, 42), wherein the transverse stiffness of the connecting elements (10) is variable.

2. A vehicle according to claim 1,
**characterised in that** the transverse stiffness of the connecting elements (10) is switchable between two states: "very high transverse stiffness" and "very low transverse stiffness".

3. A vehicle according to claim 1 or claim 2,
**characterised in that** in each case two connecting elements (10) are provided on the front axle (20) and/or on the rear axle (40), considered in the longitudinal direction (x) of the vehicle, in front of and behind the respective line (L) connecting the wheel contact areas (22, 42).

4. A vehicle according to any of the preceding claims,
**characterised in that** at least one connecting element (10) is shaped to form a regulating path and/or a regulating angle.

5. A method of influencing the individual steering properties of a motor vehicle comprising a chassis frame and a vehicle body, wherein the chassis frame supports a front axle and a rear axle and the body is connected to the chassis frame by connecting elements, **characterised in that** at least one connecting element (10), the stiffness of which is varied, is provided on the front axle (20) and/or on the rear axle (40), considered in the longitudinal direction (x) of the vehicle, in front of and behind the respective line (L) joining the contact areas (22, 42) of the wheels (24, 44) on the front and/or rear axle (20, 40).

6. A method according to claim 5,
**characterised in that** the transverse stiffness of the at least one connecting element (10) before and behind the respective line (L) joining the wheel contact areas (22, 42) is altered so that
- in a first adjustment the at least one connecting element (10) in front of the line (L) joining the wheel contact areas (22, 42) has very high transverse stiffness and the at least one connecting element (10) behind the line (L) joining the wheel contact areas (22, 42) has a very low transverse stiffness, and
- in a second adjustment the at least one connecting element (10) in front of the line (L) joining the wheel contact areas (22, 42) has a very low transverse stiffness and the at least one connecting element (10) behind the line (L) joining the wheel contact areas (22, 42) has a very high transverse stiffness.

7. A method according to claim 5 or claim 6,
**characterised in that** the transverse stiffness of the connecting elements (10) is altered in dependence on at least one parameter derived from the response of the vehicle (1) during operation.

8. A method according to claim 7,
**characterised in that** the transverse stiffness of the connecting elements (10) is altered in dependence on the speed and/or the steering lock and/or the load on the vehicle (1).

9. A method according to any of the preceding claims for application to a vehicle according to claim 4,
**characterised in that** the connecting element (10) is actuated so that when the vehicle (1) travels round a bend the connecting element subjects the body (4) to a yaw angle which is less than the yaw angle of the chassis frame (2).

## Revendications

1. Véhicule comportant un cadre de châssis et une carrosserie, ce cadre de châssis recevant le mécanisme de roulement équipé d'un essieu avant et d'un essieu arrière et la carrosserie du véhicule étant reliée au cadre de châssis par l'intermédiaire d'éléments de liaison, ces éléments de liaison étant situés - dans la direction longitudinale du véhicule - à distance de la ligne de liaison des points de soulèvement des roues de l'essieu avant et/ou de l'essieu arrière,
**caractérisé en ce que**
sur l'essieu avant (20) et/ou sur l'essieu arrière (40) - dans la direction longitudinale x du véhicule - il est respectivement prévu, en amont ainsi qu'en aval de la ligne de liaison (L) concernée des points de soulèvement de roue (22, 42) un élément de liaison (10), la raideur transversale de cet élément de liaison (10) étant variable.

2. Véhicule conforme à la revendication 1,
**caractérisé en ce que**
la raideur transversale de l'élément de liaison (10) est commutable entre les deux états « raideur très élevée » et « raideur très faible ».

3. Véhicule conforme à la revendication 1 ou 2,
**caractérisé en ce que**
sur l'essieu avant (20) et/ou sur l'essieu arrière (40), - considéré dans la direction longitudinale x du véhicule - il est prévu en amont et en aval de la ligne de liaison (L) concernée des points de soulèvement de roue (22, 24) deux élément de liaison (10) respectifs.

4. Véhicule conforme à l'une des revendications précédentes **caractérisé en ce qu'**
au moins un élément de liaison (10) est conçu de façon à pouvoir effectuer une course de réglage et/ ou un angle de réglage.

5. Procédé permettant de faire varier le comportement de direction à la marche par inertie d'un véhicule comportant un cadre de châssis et une carrosserie, ce cadre de châssis recevant un essieu avant et un essieu arrière et la carrosserie du véhicule étant reliée au cadre de châssis par l'intermédiaire d'éléments de liaison,
**caractérisé en ce que**
sur l'essieu avant (20) et/ou sur l'essieu arrière (40), - dans la direction longitudinale x du véhicule - il est prévu, respectivement en amont ainsi qu'en aval de la ligne de liaison (L) concernée des points de soulèvement de roue (22, 42) des roues (24, 44) de l'essieu avant et/ou de l'essieu arrière (20, 40), au moins un élément de liaison (10) dont la raideur transversale est variable.

6. Procédé conforme à la revendication 5,
**caractérisé en ce que**
la raideur transversale de l'élément de liaison (10) situé en amont et en aval de la ligne de liaison (L) concernée des points de soulèvement de roue (22, 42) est modifiée de sorte que :
- dans un premier état de réglage, l'élément de liaison (10) situé, en amont de la ligne de liaison (L) des points de soulèvement de roue (22, 42) présente une raideur transversale très élevée tandis que l'élément de liaison (10) situé en aval de la ligne de liaison (L) des points de soulèvement de roue (22, 42) présente une raideur transversale très faible, et
- dans un second état de réglage, l'élément de liaison (10) situé en amont de la ligne de liaison (L) des points de soulèvement de roue (22, 42) présente une raideur transversale très faible tandis que l'élément de liaison (10) situé en aval de la ligne de liaison (L) des points de soulèvement de roue (22, 42) présente une raideur transversale très élevée.

7. Procédé conforme à la revendication 5 ou 6,
**caractérisé en ce que**
la raideur transversale des éléments de liaison (10) est modifiée en fonction d'au moins un paramètre de fonctionnement du véhicule (1).

8. Procédé conforme à la revendication 7,
**caractérisé en ce que**
la raideur transversale des éléments de liaison (10) est modifiée en fonction de la vitesse et/ ou du braquage et/ ou de la charge du véhicule (1).

9. Procédé conforme à l'une des revendications précédentes, destiné à être mis en oeuvre dans un véhicule conforme à la revendication 4, **caractérisé en ce que**
l'élément de liaison (10) est commandé de sorte que, dans un déplacement en courbe du véhicule (1) soit produit sur la carrosserie (4) un angle de lacet inférieur à l'angle de lacet du cadre de châssis (2).
